# EUROPÄISCHE PATENTSCHRIFT

(11) **EP 0 940 618 B1**
(45) Veröffentlichungstag und Bekanntmachung des Hinweises auf die Patenterteilung: **20.10.2004**
(21) Anmeldenummer: 99103833.2
(22) Anmeldetag: 27.02.1999
(51) Int. Cl.: F16L 21/08

(54) **Spannbare Rohrkupplung**
Tensionable pipe coupling
Raccord de tuyaux à serrage

(30) Priorität: 04.03.1998 DE 29803713 U
(43) Veröffentlichungstag der Anmeldung: 08.09.1999
(73) Patentinhaber: Rasmussen GmbH, 63477 Maintal (DE)
(72) Erfinder: Schreiter, Reiner, 63477 Maintal (DE)
(74) Vertreter: Knoblauch, Andreas, Dr.-Ing.

(56) Entgegenhaltungen:
- FR-A- 2 359 354
- GB-A- 1 403 671
- US-A- 3 423 111
- US-A- 3 582 112

## Beschreibung

Die Erfindung bezieht sich auf eine spannbare Rohrkupplung zum axialen Verbinden zweier glatter Rohre, mit aus einem Metallband geformten, im verbundenen Zustand der Rohre deren Endabschnitte mit zumindest einer Unterbrechung umgebenden Ringen, die an ihrem radial inneren Rand in einer Ebene des Metallbands liegende Zähne aufweisen, die beim Spannen der Rohrkupplung mit ihren freien Enden in das Rohrmaterial eingreifen, wobei die dem einen Rohr zugeordneten Zähne zu den dem anderen Rohr zugeordneten Zähnen hin geneigt sind.

Bei einer bekannten Rohrkupplung dieser Art sind die Zähne (auch "Krallen" genannt) sägezahnförmig, d.h. in Axialrichtung der Rohre gesehen V-förmig, zugespitzt, wobei ihre radial innere Stirnkante schräg zur Axialrichtung (Längsrichtung der Rohre) geneigt ist und senkrecht zur Ebene des Metallbands steht. Die spitze Form der Zähne hat zwar den Vorteil, daß sie auch bei Metallrohren tief in das Rohrmaterial eindringen können, um ein Herausgleiten der Rohre aus der Rohrkupplung bei hohem Innendruck zu verhindern. Darüber hinaus können sie sich bei hinreichender Steifigkeit des Zahnmaterials bei zunehmendem Innendruck und axialer Auseinanderbewegung der Rohre aus ihrer Schräglage gegenüber der Längsrichtung radial in zunehmendem Maße aufrichten und dadurch die Klemmwirkung der Rohrkupplung am Umfang der Rohre sowie die Eindringtiefe der Zähne steigern, um den axialen Zusammenhalt der Rohre trotz des zunehmenden Innendrucks zu gewährleisten. Doch besteht bei sehr hohen Innendrücken schließlich die Gefahr, daß die Steifigkeit der Zähne nicht ausreicht, insbesondere aufgrund ihres sich zum spitzen Ende hin verringernden Querschnitts, so daß die Zähne in sich verbogen werden können. Darüber hinaus besteht die Gefahr, daß die Zahnspitzen bei weniger harten Rohren unter Ausbildung V-förmiger Axialrillen in den Oberflächen der Rohre ein axiales Auseinanderdrücken der Rohre bei hohem Innendruck zulassen.

FR-A-2 359 354 offenbart eine spannbare Rohrkupplung gemäβ dem Oberbegriff des Anspruchs.

Der Erfindung liegt die Aufgabe zugrunde, eine Rohrkupplung der eingangs genannten Art anzugeben, bei der die Zähne nicht nur eine höhere Biegesteifigkeit aufweisen, sondern auch eine Rillenbildung in der Rohroberfläche weitgehend verhindern.

Erfindungsgemäß ist diese Aufgabe von dem Gegenstand des Anspruchs gelöst.

Bei dieser Rohrkupplung sind die Zähne mithin, in Axialrichtung gesehen, nicht V-förmig zugespitzt. Sie können daher keine Rillen in das Rohrmaterial reißen und haben eine höhere Biegefestigkeit in der Nähe ihrer Enden. Dennoch können die Stirnflächen der Zähne hinreichend tief ins Rohrmaterial eindringen, so daß die Rohrverbindung auch einer sehr hohen Axialbelastung standhält.

Nachstehend wird die Erfindung anhand der beiliegenden Zeichnungen bevorzugter Ausführungsbeispiele näher beschrieben. Es zeigen:
- Fig. 1: eine radiale Ansicht eines Ausführungsbeispiels der erfindungsgemäßen Rohrkupplung, teilweise im Schnitt,
- Fig. 2: eine Axialansicht der Rohrkupplung nach Fig. 1,
- Fig. 3: einen Axialschnitt durch die Rohrkupplung nach Fig. 1 im gespannten Zustand, in dem sie zwei glatte Rohre axial verbindet,
- Fig. 4: einen vergrößerten Ausschnitt der Fig. 3 und
- Fig. 5: einen Querschnitt durch den in den Fig. 1, 3 und 4 links dargestellten Ring im Bereich eines Zahns.

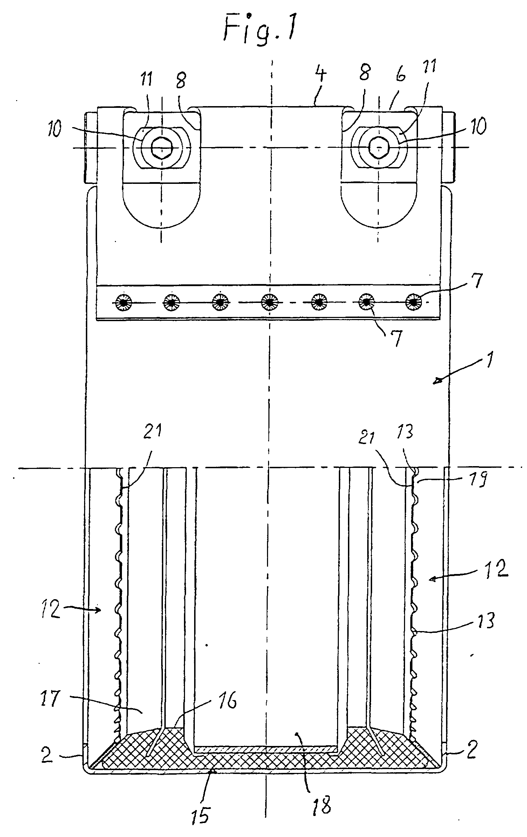

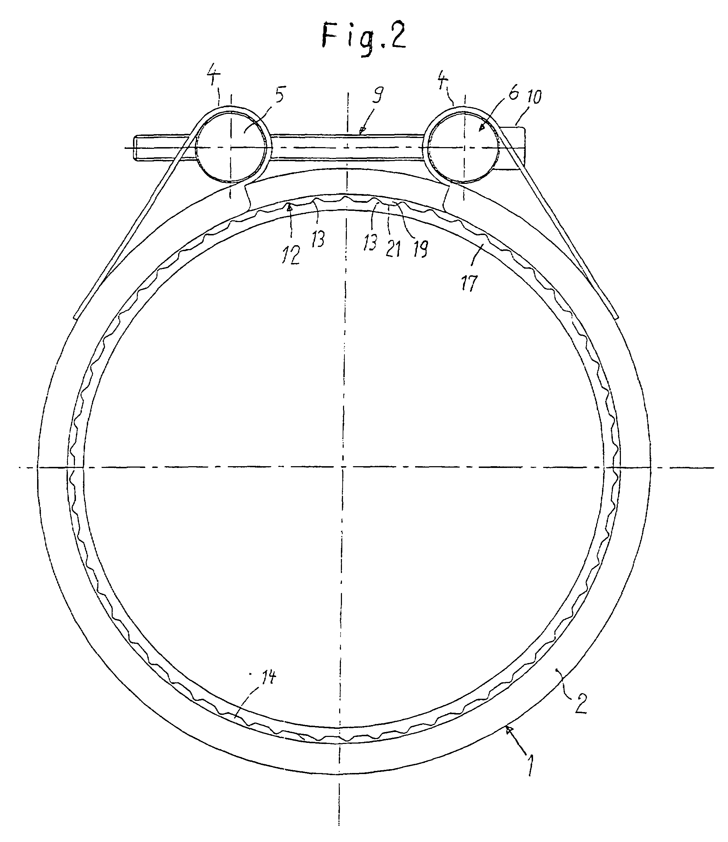

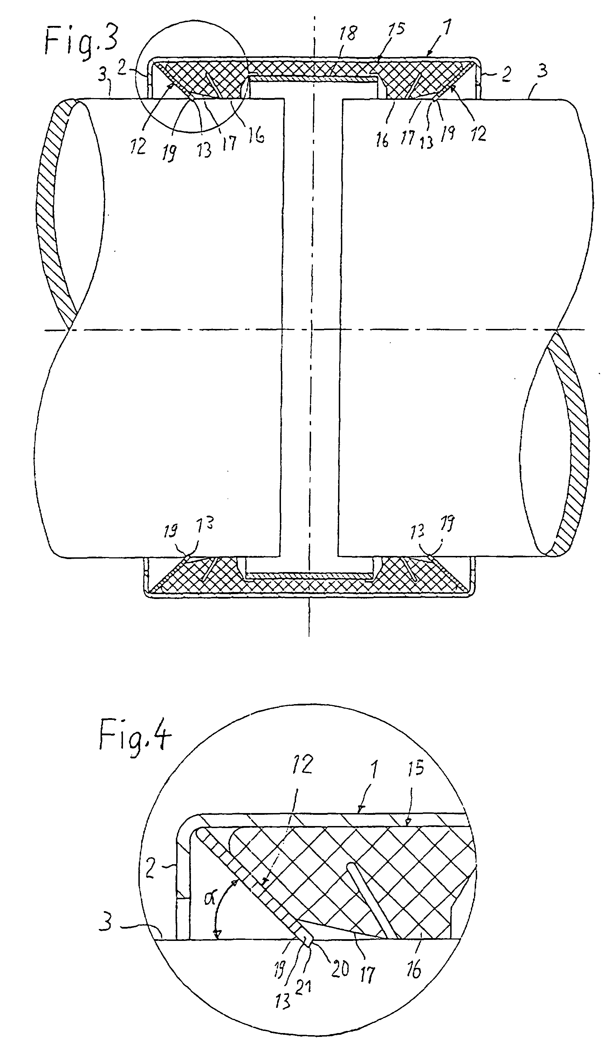

Die Rohrkupplung nach den Fig. 1 bis 5 ist wie folgt ausgebildet: Ein nicht vollständig zu einem Ring aus Stahlblech gebogener Mantel 1 hat an seinen axialen Enden radial nach innen umgebogene Stirnwände 2, deren Innendurchmesser größer als der Außendurchmesser der zu verbindenden Rohre 3 (Fig. 3) ist. Der Mantel 1 ist in Umfangsrichtung unterbrochen und an den die Unterbrechung begrenzenden Enden mit Laschen ausgebildet, die jeweils zu einer Schlaufe 4 (Fig. 1 und 2) um jeweils einen axialen Rundbolzen 5 bzw. 6 auf die Außenseite des Mantels 1 herumgebogen und an dieser durch Buckelschweißungen 7 (Fig. 1) befestigt sind. Die Schlaufen 4 haben jeweils einen sich teilweise um die Rundbolzen 5, 6 herum erstreckenden Schlitz 8 (Fig. 1). Der Rundbolzen 6 hat im Bereich der Schlitze 8 jeweils eine axial durchgehende Bohrung ohne Innengewinde. Der Rundbolzen 5 hat im Bereich jedes Schlitzes der anderen Schlaufe ebenfalls eine radial durchgehende Bohrung, jedoch mit Innengewinde. Die Schlitze 8 und die radialen Bohrungen der Rundbolzen 5, 6 sind jeweils von einer Spannschraube 9 durchsetzt, deren Kopf 10 einen Innenmehrkant aufweist und an einer Schulter 11 einer die Durchgangsbohrungen des Rundbolzens 6 erweiternden Sackbohrung anliegt.

An der Innenseite der Biegekante der Stirnwände 2 des Mantels 1 liegt die radial äußere Kante jeweils eines kegelstumpfförmigen, einmal in Umfangsrichtung unterbrochenen Rings 12 an. Die Ringe 12 sind aus einem Metallband geformt. An ihrem radial inneren Rand sind die Ringe 12 mit in der Ebene des Metallbands liegenden, in Axialrichtung der Rohre 3 gesehen, etwa trapezförmigen Zähnen 13 versehen. Die Endabschnitte 14 (Fig. 2) jedes Rings 12 überlappen sich in Umfangsrichtung.

An der Innenseite des Mantels 1 liegt eine Dichtungsmanschette 15 aus elastomerem Material mit schräg radial nach innen an jedem axialen Ende vorstehenden Dichtlippen 16, 17 an. Die Dichtlippen 16, 17 liegen an den Rohren 3 außen an, wenn die Rohre 3 gemäß Fig. 3 in die Rohrkupplung eingeführt und verspannt sind. Zwischen den Dichtlippen 16 liegt an der Innenseite der Dichtungsmuffe 15 ein aus einem Blechstreifen geformter Ring 18 an, der einmal in Umfangsrichtung unterbrochen ist und dessen Endabschnitte sich in Umfangsrichtung überlappen. Der Ring 18 stellt sicher, daß das Material der Dichtungsmuffe 15 beim Spannen der Rohrkupplung nicht zwischen die Enden der Rohre 3 gedrückt wird.

Die Unterbrechung des Mantels 1 ist durch eine Brücke überbrückt, die am Umfang der Dichtungsmanschette 15 anliegt und von den Endabschnitten des Mantels 1 überlappt ist.

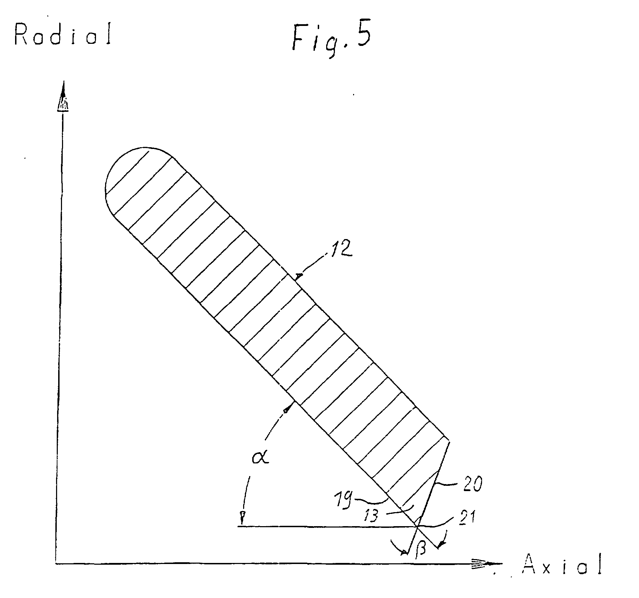

Wie Fig. 3 zeigt, sind die dem einen Rohr zugeordneten Zähne 13, einschließlich des Rings 12, an dem sie ausgebildet sind, zu den dem anderen Rohr 3 zugeordneten Zähnen 13, einschließlich dem anderen Ring, an dem diese Zähne 13 ausgebildet sind, unter einem Winkel α von etwa 35° bis etwa 55°, vorzugsweise 45°, gemäß den Fig. 4 und 5 hin geneigt. Die der Außenseite des in die Rohrkupplung eingeführten Rohres 3 zugekehrte Seite 19 jedes Zahns 13 schließt mit der Stirnfläche 20 des freien Zahnendes einen Winkel β von etwa 50° bis etwa 80°, vorzugsweise etwa 70°, ein (Fig. 5). Dadurch ergibt sich eine scharfe Kante 21 an jedem Zahnende, die sich quer zur Axialrichtung der Rohrkupplung und der Rohre 3 erstreckt.

Beim Spannen der Rohrkupplung dringen die Zähne 13 mit den scharfen Kanten 21 an ihren freien Enden in das Rohrmaterial ein, vgl. Fig. 3 und 4, und verhindern dadurch, in Verbindung mit den sich über ein längeres Stück in Umfangsrichtung der Rohre erstreckenden Kanten 21, ein Auseinanderziehen der Rohre 3 bei hohem Innendruck in den Rohren 3. Die in Rohrumfangsrichtung aufgrund ihrer Trapezform etwas breiter als V-förmige Zähne ausgebildeten Zähne 13 haben ferner eine höhere Biegesteifigkeit. Außerdem haben die Ringe 12, einschließlich der Zähne 13, das Bestreben, sich radial aufzurichten, wenn sich die Rohre 3 unter dem Innendruck axial auseinanderbewegen wollen. Dadurch erhöht sich die Eindringtiefe der Zähne 13 im Rohrmaterial und damit auch die axiale Belastbarkeit der durch die Rohrkupplung bewirkten Verbindung der Rohre.

Dementsprechend hält die Rohrverbindung sehr hohen Axialbelastungen, die bestrebt sind, die Rohre auseinanderzubewegen, ohne eine Verbiegung der Zähne 13 und ohne die Ausbildung von Axialrillen in den Rohren 3 durch die Zähne 1 stand.

Abwandlungen des dargestellten Ausführungsbeispiels können beispielsweise darin bestehen, daß die Stirnwände 2 des Mantels 1 nicht genau radial, sondern axial zueinander hin gebogen und mit den Zähnen 13 der Ringe 12 entsprechenden Zähnen versehen werden, die in das Rohrmaterial eingreifen können. Gegebenenfalls können die Ringe 12 entfallen, so daß allein die Stirnwände 2 entsprechende Ringe bilden. Es wäre aber auch möglich, die Ringe 12 zusätzlich vorzusehen.

Alternativ könnten an der Innenseite des Mantels 1 mit einer doppelten Reihe von Zähnen versehene Ringe angebracht sein, wobei die Zähne jedes Rings in der gleichen Richtung oder in entgegengesetzten Richtungen zur Längsrichtung hin geneigt sein.

Bei Metallrohren würde das Material der Ringe aus Stahlblech bestehen. Bei Rohren aus weicherem Material, wie Kunststoff, können die Ringe auch aus weniger hartem Metallblech bestehen.

## Patentansprüche

1. Spannbare Rohrkupplung zum axialen Verbinden zweier glatter Rohre (3), mit einem nicht vollständig zu einem Ring aus Stahlblech gebogenen, mittels Spannschrauben (9) spannbaren Mantel (1), der nach innen umgebogene Stirnwände (2) aufweist, und mit aus einem Metallband geformten, im verbundenen Zustand der Rohre (3) deren Endabschnitte mit zumindest einer Unterbrechung umgebenden Ringen (12), die an ihrem radial inneren Rand in einer Ebene des Metallbands liegende Zähne (13) aufweisen, die beim Spannen der Rohrkupplung mit ihren freien Enden in das Rohrmaterial eingreifen, wobei die dem einen Rohr (3) zugeordneten Zähne (13) von den dem anderen Rohr (3) zugeordneten Zähnen (13) weg geneigt sind und die der Außenseite des in die Rohrkupplung eingeführten Rohres (3) zugekehrte Seite (19) jedes Zahns (13) mit der an diese Seite (19) angrenzenden, bis zu der dem Rohr (3) abgekehrten Zahnseite eben durchgehenden Stirnfläche (20) des Zahns (13) einen spitzen Winkel (β) einschließt, wobei die radial äußere Kante der Ringe (12) an der Innenseite der Biegekante jeweils einer der Stirnwände (2) anliegt, **dadurch gekennzeichnet, daß** die Zähne (13) eine sich quer zur Axialrichtung der Rohrkupplung erstreckende Kante (21) aufweisen und der spitze Winkel (β) im Bereich von 50° bis 80°, vorzugsweise bei etwa 70°, liegt und die der Außenseite des in die Rohrkupplung eingeführten Rohres (3) zugekehrte Seite (19) mit dieser Außenseite einen Winkel (α) im Bereich von 35° bis 55°, vorzugsweise etwa 45°, einschließt.

## Claims

1. A tensionable pipe coupling for the axial connection of two smooth pipes (3), the coupling having a shell (1) incompletely bent into a ring of sheet steel with radially inward curved end walls (2) and tensionable by tensioning screws (9), and the coupling having rings (12) shaped from a metal strip and, in the connected state of the pipes (3), surrounding the end sections of the pipes with at least one interruption, the rings having teeth (13) at their radially inward edge, lying in a plane of the metal strip and, when the pipe coupling is clamped, engaging into the pipe material with their free ends, the teeth (13) assigned to one pipe (3) being inclined away from the teeth (13) assigned to the other pipe (3) and the side (19) of each tooth (13) facing the outside of the pipe (3) introduced into the pipe coupling enclosing an acute angle (β) with the end surface (20) of the tooth (13) adjoining this side (19) and extending to a point level with the side of the tooth facing away from the pipe (3), wherein the radially outer edge of the rings (12) abuts at the inside of the bent edge of one of the end walls (2), respectively, **characterised in that** the teeth (13) have an edge (21) extending transversely to the axial direction of the pipe coupling and the acute angle (β) is in the region of approximately 50° to 80°, preferably approximately 70°, and the side (19) facing the outside of the pipe (3) introduced into the pipe coupling encloses an angle (α) in the region of approximately 35° to 55°, preferably approximately 45°, with this outside.

## Revendications

1. Raccord de tuyaux à serrage pour la liaison axiale de deux tuyaux lisses (3), avec un manteau (1) non complètement plié en une bague en tôle d'acier et pouvant être serré au moyen de vis de serrage (9), qui présente des parois d'extrémité (2) enroulées vers l'intérieur, et avec des bagues (12) formées d'une bande de métal et entourant, à l'état accouplé des tuyaux (3), leurs extrémités avec au moins un intervalle, lesquelles bagues présentent sur leur périphérie interne radialement dans un plat de la bande métallique des dents (13), qui pénètrent lors du serrage du raccord avec leurs extrémités libres dans le matériau du tuyau, les dents (13) attribuées à un tuyau (3) étant inclinées par rapport aux dents (13) attribuées à l'autre tuyau (3) et le côté (19) de chaque dent (13) correspondant à la face externe du tuyau (3) introduit dans le raccord de tuyaux forme un angle aigu (β) avec le bord d'attaque (20) de la dent (13) adjacent à ce côté (19) et traversant jusqu'au côté de la dent inverse par rapport au tuyau (3), l'arête radialement externe des anneaux (12) reposant sur le côté interne de l'arête de pliage d'un des bords d'attaque (2) respectivement, **caractérisé en ce que** les dents (13) présentent une arête (21) s'étendant perpendiculairement à la direction axiale du raccord et l'angle aigu (β) se situe dans la fourchette de 50° à 80°, de préférence environ 70°, et la partie (19) opposée au côté externe du tuyau (3) introduit dans le raccord forme avec ce côté externe un angle (α) dans la fourchette de 35° à 55°, de préférence d'environ 45°.
